# EUROPEAN PATENT APPLICATION

(11) **EP 1 249 922 A1**
(43) Date of publication of application: **16.10.2002**
(21) Application number: 01303402.0
(22) Date of filing: 11.04.2001
(51) Int. Cl.: H02M 1/00

(54) **Method and apparatus for controlling voltage flicker**

(71) Applicant: QUADLUX, INC., Orinda, CA 94563 (US)
(72) Inventor: Westerberg, Eugene, R., California 94303 (US)
(74) Representative: Vleck, Jan Montagu

(57) **Abstract**

A method for controlling voltage flicker in an appliance having a high current drawing element by preventing a large in-rush current through the appliance comprising initially supplementing (200)the resistance across the said current drawing element in the appliance when the said element is first energized or re-energized to make the combined resistance of the element and the supplemental resistance source high enough to avoid a large in-rush current.

## Description

### Field of the Invention

The present invention relates generally to the field of electrical appliances and specifically to apparatuses and methods for controlling the voltage flicker that can occur when power is supplied to electrical appliances.

### Background of the Invention

There is a phenomenon referred to as "voltage flicker" which can occur when power is supplied to lamps and other electrical appliances in order to turn them on. The flicker phenomenon is less easily controlled in geographic locations where the local power source is relatively unstable. In some geographic locations, turning a lamp or other appliance in a particular home "on" can cause a temporary dimming and subsequent brightening of the other lamps in the home. A common flicker experience is the dimming of lights that may be observed in a home when an air conditioner is turned on or when a thermostat in a refrigerator causes the cooling system in the refrigerator to turn on. The flicker effect caused by turning an appliance on in one home or business may even be experienced in neighboring homes or businesses.

The flicker effect is the result of the in-rush of current that pours into an appliance during an initial power-up. This in-rush of current is the result of the low resistance that is present in the cold wires of the appliance (for example, in the case of a lamp, the cold lamp filaments). The effect of the in-rush current is to decrease the amount of voltage available for other appliances connected to the same power source. After the appliance or lamp has been on for several seconds, the resistance in the wires increases and the current flowing into the appliance decreases. The voltage applied to the surrounding appliances then increases, allowing them to resume their normal function.

Certain countries propose to regulate the amount of flicker effect that may result from use of large appliances that draw large amounts of power. Thus, to minimize flicker, certain appliances are designed such that when switched "on" by a user, the appliances advance slowly to a full power condition, and when switched "off" they slowly lower the amount of power until they reach the off condition. This can require a user to wait before s/he can actually begin to use the appliance.

Lightwave ovens are cooking ovens which utilize lamps to impinge radiant energy onto food to be cooked. When a lightwave oven is turned to an "on" condition, the problem of voltage flicker can be particularly notable. Because lightwave ovens typically cook using a plurality of lamps, there may be a tremendous amount of current in-rush as the plurality of cold lamps are turned on. It is preferable to avoid the need for slowly elevating the lamps to a full power condition. A slow power-up cycle would detract from two primary benefits of lightwave cooking: the absence of a pre-heat cycle (lightwave cooking does not require a heated oven since it relies on radiant energy rather than heated air) and the tremendously fast cooking times enjoyed by lightwave oven users. Moreover, during some lightwave cooking modes, lamps are cycled on and off in a manner that may produce flicker effects as the lamps are cycled. Naturally, slowing application of voltage across these lamps in such instances would be highly detrimental to the cooking function.

It is therefore desirable to provide a method and apparatus for controlling voltage flicker that is suitable for lightwave ovens as well as other appliances. It is particularly desirable to provide a method and apparatus for controlling voltage flicker which will not require the user to wait an extended period of time for oven power-up.

### Summary Of The Invention

The present invention is a method and apparatus for controlling voltage flicker by preventing the large in-rush current through an appliance that can result from the relatively cool temperature (and thus low resistance) of the appliance circuitry when voltage is applied. The method according to the present invention involves initially supplementing the resistance across each lamp in the oven when the lamp is first illuminated (or re-illuminated) to make the combined resistance of the appliance and the supplemental resistance source high enough to avoid large in-rush current. The method preferably includes the step of gradually decreasing the supplemental resistance over the course of the appliance's warm-up period, so that the combined supplemental and appliance resistance remains relatively constant over time.

### Detailed Description of the Drawings

Figures 1A - 1C illustrate a lightwave oven for which the method and apparatus for controlling voltage flicker according to the present invention may be utilized.
   Figure 1A is a top cross-sectional view of the lightwave oven of the present invention.
   Figure 1B is a front view of the lightwave oven of the present invention.
   Figure 1C is a side cross-sectional view of the lightwave oven of the present invention.
Fig. 2 is a block diagram illustrating the method of controlling voltage flicker in accordance with the present invention.
Figs. 3A-3C are schematic diagrams illustrating one configuration for an apparatus for controlling voltage flicker in accordance with the method of Fig. 2.

### Detailed Description

The present invention will be described with reference to a lightwave oven because it has been found particularly suitable for use with lightwave ovens. As discussed above, the use of cooking lamps in lightwave ovens make them particularly susceptible to the problem of voltage flicker. However, it is not intended that the present invention be limited to the use of the described methods and apparatuses only in connection with lightwave ovens. Instead, it should be appreciated that the described methods and apparatuses for controlling voltage flicker are adaptable to many forms of electrical appliances outside of the lightwave cooking field.

### Lightwave Ovens

Ovens for cooking and baking food have been known and used for thousands of years. Basically, oven types can be categorized in four cooking forms; conduction cooking, convection cooking, infrared radiation cooking and microwave radiation cooking. Recently introduced lightwave ovens are capable of cooking and baking food products in times much shorter than conventional ovens. This cooking speed is attributable to the range of wavelengths and power levels that are used.

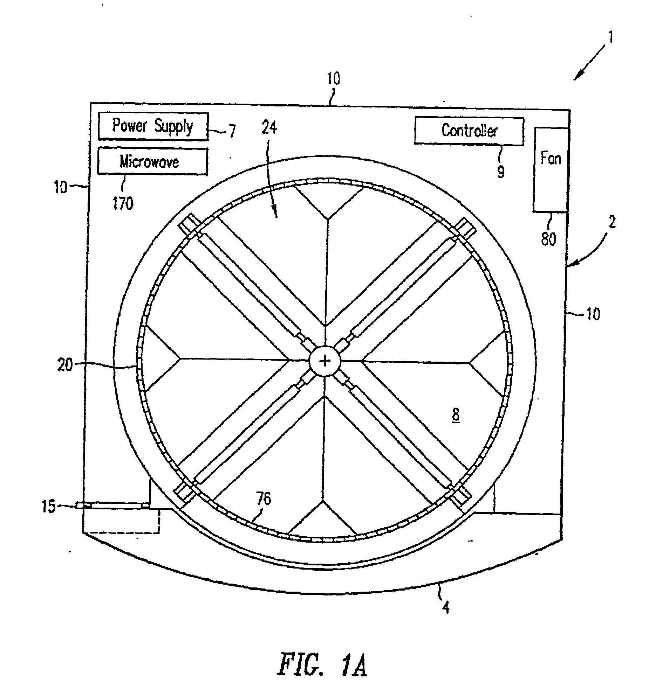

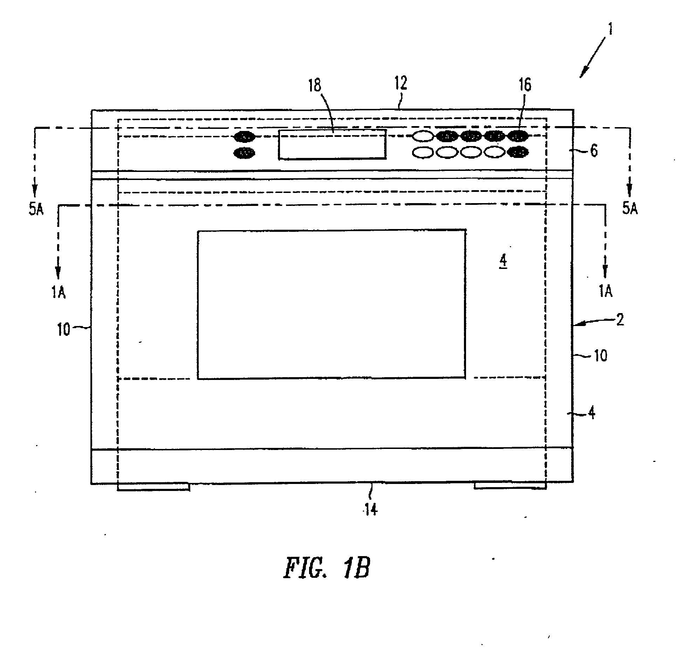

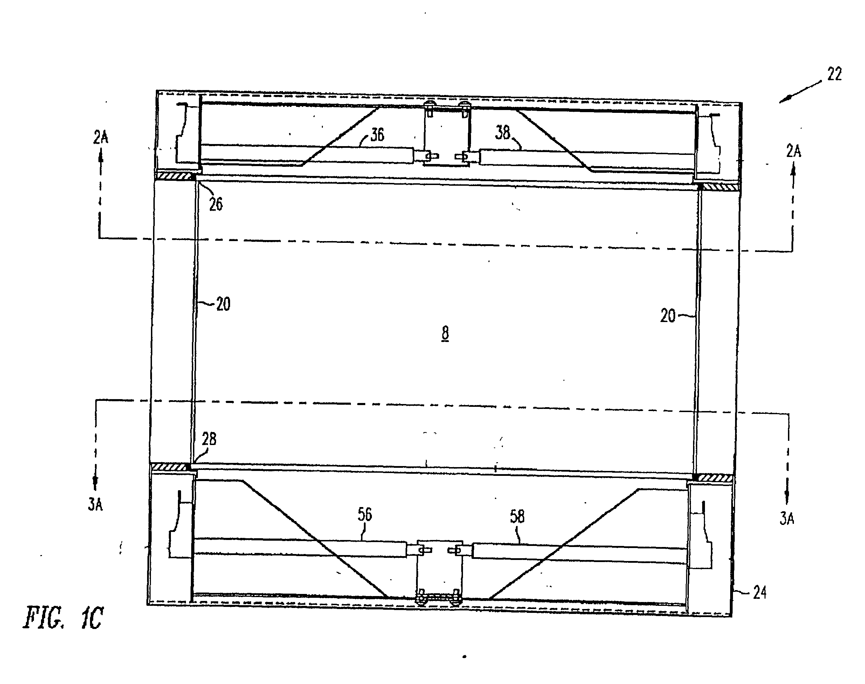

A cylindrical-shaped lightwave employing the present invention is illustrated in Figures 1A-1C. The lightwave oven 1 includes a housing 2, a door 4, a control panel 6, a power supply 7, an oven cavity 8, and a controller 9.

The housing 2 includes sidewalls 10, top wall 12, and bottom wall 14. The door 4 is rotatably attached to one of the sidewalls 10 by hinges 15. Control panel 6, located above the door 4 and connected to controller 9, contains several operation keys 16 for controlling the lightwave oven 1, and a display 18 indicating the oven's mode of operation.

The oven cavity 8 is defined by a cylindrical-shaped refective sidewall 20, an upper reflector assembly 22 at an upper end 26 of sidewall 20, and a lower reflector assembly 24 at the lower end 28 of sidewall 20.

Upper reflector assembly 22 includes upper lamps 36, 37, 38, 39 positioned below a reflecting surface 30, and lower reflector assembly 24 includes lower lamps 56, 57, 58, 59 above a lower reflecting surface 50.

Power supply 7 is connected to electrodes 32, 34, 52 and 54 to operate, under the control of controller 9, each of the lamps 36-39 and 56-59 individually.

Upper and lower lamps 36-39 and 56-59 are generally any of the quartz body, tungsten-halogen or high intensity discharge lamps commercially available, e.g., 1 KW 120 VAC quartz-halogen lamps. The oven according to the preferred embodiment utilizes eight tungsten-halogen quartz lamps, which are about 7 to 7.5 inches long and cook with approximately fifty percent (50%) of the energy in the visible and near-visible light portion of the spectrum at full lamp power. The direct radiation from the lamps, combined with the reflections off of the non-planar reflecting surfaces 30/50, evenly irradiate the entire volume of the oven cavity 8. Further, any light missing the foodstuff, or reflected off of the foodstuff surface, is reflected by the cylindrical sidewall 20 and reflecting surfaces 30/50 so that the light is redirected back to the foodstuff.

The oven of the present invention may also be used cooperatively with other cooking sources. For example, the oven of the present invention may include a microwave radiation source 170. Such an oven would be ideal for cooking a thick highly absorbing food item such as roast beef. The microwave radiation would be used to cook the interior portions of the meat and the infra-red, near-visible and visible light radiation of the present invention would cook and brown the outer portions.

### Voltage Flicker Minimization

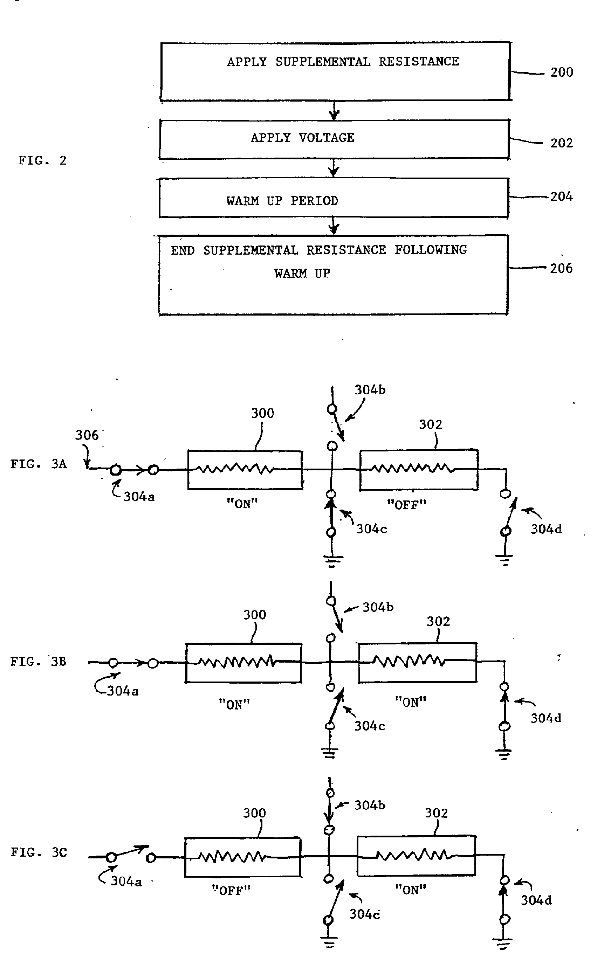

A method and apparatus for controlling voltage flicker for apparatuses including, but not limited to, ovens such as the oven described above are shown in Figs. 2 - 3. The method and apparatus minimizes voltage flicker by preventing the large in-rush current through a lamp that can result from the relatively cool temperature (and thus low resistance) of the lamp filament.

Referring to Fig. 2, the method according to the present invention involves initially supplementing the resistance across each lamp in the oven when the lamp is first illuminated. Steps 200, 202. Because the resistance across a cool lamp is low, the supplemental resistance would thus be sufficiently high to make the combined resistance of the lamp filament and the supplemental resistance source high enough to avoid large in-rush current. After it is turned on, the lamp is permitted to warm up for a warm-up period corresponding to an amount of time that will allow the resistance of the lamp to increase to its normal operating level. Step 204. The warm-up period may be approximately .25 to .50 seconds with an average warm up period of about .35seconds for lamps of the type described above. The method preferably but optionally includes the step of gradually decreasing the supplemental resistance over the course of the warm-up period, so that the combined supplemental and lamp resistance remains relatively constant. The supplemental resistance falls to zero at the end of the warm up period. Step 206.

The variable resistance for the present invention may be achieved in a number of ways. For example, commercially available variable resistors may be placed in series with each lamp used in the oven. Alternatively, a software algorithm may be used in combination with a resistor to cause the supplemental resistance to decrease over time. As another example, a circuit may be utilized that establishes a time constant and applies the resistance in a manner that decreases over time. Such a circuit might include a resistor, capacitor, diode and MOSFET device.

Alternatively, the supplemental resistance may be provided by other lamps within the oven. The application of supplemental resistance would occur by sequentially illuminating the lamps on initial power-up of the oven. The method involves illuminating a first lamp, then leaving it on as the second lamp (connected in series with the first lamp) is illuminated. The first lamp would thus serve to control the current (by adding to the very small resistance across the second lamp) until the second lamp was heated sufficiently to reach its normal resistance. The second lamp is used in a similar manner to light a third lamp, etc.

This scheme for minimizing voltage flicker is schematically illustrated in the diagram of Figs. 3A, 3B, and 3C, which illustrate the sequence of illuminating the lamps in accordance with the present invention.

Referring to Fig. 3A, first and second lamps 300, 302 are connected in series to one another. A first switch 304a is connected between lamp 300 and power supply 306. A second switch 304b is connected between lamp 302 and power supply 306. Third and fourth switches 304c, 304d are connected between the lamps and ground. The switches 304 a-d may be configured in number of ways, including with mechanical switches, FET devices, and triads.

Initially, Fig. 3A, switches 304a and 304c are closed to turn lamp 300 to the "on" state at full power, while leaving lamp 302 off. Next, Fig. 3B, switch 304c is opened and switch 304d is closed, causing current to pass in series through the lamps as they are operated at a reduced power. When in this condition, in-rush of current is prevented by the combined resistance across lamps 300, 302. After lamp 302 has warmed up, switch 304a is opened to turn lamp 300 "off". Switches 304b and 304d are closed, allowing lamp 302 to be operated at full power as shown in fig. 3C.

The present invention for controlling voltage flicker may be used during the initial powering-on of the lamps, and it also may be useful during cooking sequences in which lamps are turned to the off state for periods of sufficient duration to cause the lamp resistance to lower to a point where flicker will occur when the lamps are turned on again. The present invention may also be used for lamps used for lighting purposes. Further, supplemental and variable resistance devices for controlling flicker may be incorporated into kitchen appliances such as refrigerators, microwave and standard ovens, dishwashers, and well as other household appliances such as air conditioners which draw large amounts of current when initially turned on.

## Claims

1. A method for controlling voltage flicker in an appliance having a high current drawing element by preventing a large in-rush current through the appliance comprising initially supplementing the resistance across the said current drawing element in the appliance when the said element is first energized or re-energized to make the combined resistance of the element and the supplemental resistance source high enough to avoid a large in-rush current.

2. The method of claim 1 including the step of gradually decreasing the supplemental resistance over the course of the warm-up period of the element so that the combined supplemental and element resistance remains relatively constant over time.

3. The method according to any preceding claim wherein there are a plurality of high current drawing elements.

4. A method for controlling voltage flicker in a lightwave oven having at least one lamp by preventing the large in-rush current through the oven, comprising initially supplementing the resistance across the or each lamp in the oven when the or each lamp is first illuminated or re-illuminated to make the combined resistance of the appliance and the supplemental resistance source high enough to avoid large in-rush current.

5. The method of claim 4 including the step of gradually decreasing the supplemental resistance over the course of the warm-up period of the oven so that the combined supplemental and lamp resistance remains relatively constant over time.

6. Apparatus for controlling voltage flicker in an appliance by preventing a large in-rush current through the appliance comprising: at least one high current drawing element and means for initially supplementing the resistance across the or each of said elements in the appliance when the or each of said elements is first energized or re-energized to make the combined resistance of the element and the supplemental resistance source high enough to avoid a large in-rush current.

7. The apparatus of claim 6 including means for gradually decreasing the supplemental resistance over the course of the warm-up period of the element so that the combined supplemental and element resistance remains relatively constant over time.

8. Apparatus for controlling voltage flicker in a lightwave oven having at least one lamp by preventing a large in-rush current through the oven, comprising at least one high current drawing lamp and means for initially supplementing the resistance across the or each of said lamps in the oven when the or each of said lamps is first energized or re-energized to make the combined resistance of the lamp and the supplemental resistance source high enough to avoid a large in-rush current.

9. The apparatus of claim 8 including means for gradually decreasing the supplemental resistance over the course of the warm-up period of the oven so that the combined supplemental and lamp resistance remains relatively constant over time.
